# EUROPEAN PATENT APPLICATION

(11) **EP 3 428 808 A1**
(43) Date of publication of application: **16.01.2019**
(21) Application number: 17460042.9
(22) Date of filing: 14.07.2017
(51) Int. Cl.: G06F 17/30

(54) **COMMUNICATION BETWEEN MOBILE DEVICES AND A WEB APPLICATION RUNNING ON A SERVER**

(71) Applicant: Vsoft Spolka Akcyjna, 30-644 Krakow (PL)
(72) Inventor: DYMCZAK, Jacek, 40-025 Katowice (PL)
(74) Representative: Karczmitowicz, Teresa Ewa

(57) **Abstract**

A method for communication between mobile devices and servers is implemented in the system which comprises a server (100) with a hub (101) installed within to which at least one mobile device (102) is connected by wire or wirelessly. The server is provided with a target application (103) containing a client part (205) and a server part (206). The mobile device (102) is provided with a mobile application (104). The hub (101) has a delivery interface (201) for connecting to the mobile application (104), a client-interface (202) for connecting to the client part (205) of the target application (103), and a REST interface (203) for connecting to the server part (206) of the target application (103). The hub (101) waits for commands (209) from the target application (103) and sends (210) them to the mobile application (104) on the mobile device (102). After executing the operation requested by the target application (103) the hub (101) receives data (211) from the mobile device (102) and after processing according to a given procedure sends (212) them to the target application (103). The hub (101) contains an access key also available to the server part (206) of the target application (103) and uses it to generate an access token for the user of the mobile device (102). The hub stores in a database (204) an identifier of specific device and the user's login (215) for the paired mobile device (102) and associated user. The barcode content decoder module (207) and the OCR module (208) are attached (217) to the hub. Pairing of the mobile device (102) with the user account in the target application (103) is performed by scanning the QR code from the computer screen displaying in the browser the client part (205) of the target application (103). In order to authenticate the user, the server part (206) of the target application (103) sends to the hub (101) a request (301) of creating the token by the client part (205) of the target application (103), and provides the private access key, the user name and the application name.

## Description

This invention relates to a communication system between mobile devices and desktops, eg. between a smartphone or a tablet and a server equipped with a web application. It allows the user to quickly take advantage of the capabilities of the mobile device components to expand the functionality of his IT systems. The invention is applicable primarily to companies that use software that operates digital images and documents, as well as bar and matrix codes (QRs), such as the banking, insurance, and logistics industries, or police and public administration.

Australian patent application AU2014100652 A4 (Dyson Ross, Ori Meedia Pty Ltd., AU, 17.07.2014) describes an interactive image recognition tool designed to allow mobile phone users to scan selected print media and be delivered interactive web options. The tool uses image recognition and Optical Character Recognition (OCR) on the image captured by the user's smartphone camera.

Korean patent document KR20030036995 A (Choi Sung Won, KR, 12.05.2003) discloses a system and a method for processing web data in a mobile communication terminal. The purpose is to allow the mobile communication terminal to receive data of a web server to output corresponding information, and to install an application program on the web server so as to facilitate maintenance of the application program. A communication connection unit enables connection with a web server, a general function unit configures a screen, a graph unit produces charts for data transmitted from the web server, a text unit processes data transmitted from the web server as digits and characters, an input unit processes OCR and OMR (Optical Mark Recognition) values by using characters, digits and a scanner, to input data having a format appropriate for transmission to the web server. An information display unit displays a result on the screen for a user, and an image unit displays data transmitted from the web server in type of images.

Another Korean patent document KR20130058097 A (Sung Ki Bae, KR, 04.06.2013) discloses a smart information system using a digital information terminal and a smartphone to enable a user to participate in the digital information terminal voluntarily and to participate in an event proceeded in an advertisement and public relation through a touch screen and a motion sensor and then to check the participation result promptly through a screen and the smartphone, and to enable the user to use a mobile coupon or mobile contents provided as the winning result through the smartphone of the user. A digital information terminal includes a wired/wireless network, a motion sensor, a camera, a power supply, a touch screen, a sound input/output part, an NFC (Near Field Communication) processing part and a control part. The wired/wireless is formed through Internet with a server and communicates with an adjacent smartphone. The motion sensor is installed in the front of the digital information terminal, and senses the motion of a user. The camera acquires image information. The power supply supplies a power source to the digital information terminal. The contents management server manages information processed for a smartphone including a QR code, NFC and URL. The control part of the digital information terminal downloads the information processed for the smartphone including the QR code, NFC and URL from the contents management server by controlling the wired/wireless network, and then transmits the information to the smartphone.

The solutions known to date are not sufficiently helpful to use the equipment in an optimal way. The proposed invention makes it possible to optimize operations, speed up work, and increase security of data acquired from objects containing information in a graphic form such as photographs or paper documents.

The invented system presented below allows to set and use the connection between the mobile device and the web application. This connection is used to easily access the components of the mobile device, such as a photo camera, usually combined with a movie camera, a touch screen, microphone, speaker, etc. from a web application. The web application is further understood as a computer program that can be operated remotely by a web browser (eg. Google Chrome, Mozilla Firefox, Microsoft Internet Explorer). An example of such a web application is the Web site of the bank's transactional system or web mail.

The system of the invention comprises three key elements: a server application, hereinafter referred to as a hub, a mobile device with a mobile application running on it and an internet application, called the target application.

The target application user initiates an action performed with use of the mobile device components and its result is accessible for the target application. The mobile device is the equivalent of a peripheral device connected to the computer, such as a webcam or scanner.

The hub is a web application created in C# language developed in the .NET Framework technology, which is a development platform developed by Microsoft that includes a set of libraries and a runtime environment for running applications. It is intended for embedding in the Windows operating system, on the Internet Information Services (IIS) platform, but can also act as a standalone application if required. The application requires a Microsoft SQL Server database or Microsoft SQL Server Express database.

The SignalR library is a very important element of the hub, which is a set of functionalities that allows two-way communication between the web browser and the server from which the web page is displayed. During normal use of Internet applications, communication is usually initiated by the user. For example, switching to another page or loading new content requires the user to click on the link or button on the form. Use of additional functionalities of the SignalR library allows for automatic updating of content displayed in the browser, without the need for user action. This allows, for example, to instantly display notifications or new messages. The standard use of this type of library is a chat site, such as Facebook Messenger.

The main components of the hub are two communication interfaces implemented on the basis of the SignalR library: a delivery interface for connecting to mobile applications and a client interface for connecting to target applications, specifically to their client parts. The hub listens to commands from the target application and sends them to the mobile application on the appropriate mobile device. After performing the operation, it receives the data from the mobile device and sends it back to the target application after processing.

To prevent unauthorized access to the server, the server application, or the hub, has an authentication mechanism. The hub configuration contains a confidential string of text, which is the access key. The server part of the target application should also have this key because it uses it when creating an access token for each user, ie. a random string of characters. Token can be used multiple times, with a specific validity period. Once it has elapsed, the target application sends a request for a new token to the hub. This is only possible if the user is logged in the target application.

The hub stores the information for each paired mobile device and its associated user in the database: a device specific identifier and a user login. This allows an automatic connection of the user to the assigned mobile device immediately after use in the target application of the function utilizing the claimed communication system.

The data transferred from the mobile device is also stored in the database, for example, when the camera is used, the data is the files containing the captured images and scanned documents. These data are retrieved from the database and are provided by the Application Programming Interface (API), a strictly defined set of rules and their descriptions that describe how computer programs communicate with one another in the REST style (Representational State Transfer) which is the name of a standard that tells how a program can share its resources, such as documents to other applications. With relative simplicity and popularity, using this standard makes it easy to create applications that use shared resources. This allows access to this information by the target application at any time, not just after making a photo or scan.

Access through the API requires a unique 128-bit identifier for each file, so access by unauthorized persons who do not know the identifier is virtually impossible, since the number of possible combinations of identifiers is too large to crawl even by the fastest computers. Further identifiers are selected randomly, so it is not possible to search them sequentially. In other words, knowing one identifier one cannot determine the identifier of the previous or next file.

Identifiers are stored in the database along with associated files. The identifier is only shared with the target application once after it has completed the action (for example, after taking a picture). The target application can either download the file or keep this identifier in its own database for later retrieval. It is not possible to retrieve the list of identifiers stored by the hub.

The hub architecture allows it to include additional modules that enhance its functionality. Especially useful are the bar code decoding module and the OCR module. However, the invention is not limited to these two types of modules.

The bar code content decoding module can recognize single- and two-dimensional codes. Particularly interesting in many practical applications is the alphanumeric 2D bar code reading module described by the ISO/IEC 24778:2008 (Aztec Specification) on vehicle registration certificates, which permits significant acceleration of vehicle data entry into the target application. The module returns the decoded information from the registration certificate as text in the form of a JavaScript object. Each box, such as a model, a vehicle brand, is saved as a pair: name and value, which makes it easy for people to understand and simplifies writing interface that accepts this information in the target application. The module can use an internal decoding library or external network service. It should be emphasized that in other applications, a two-dimensional codes decoder module can be used in other systems, such as QR-code or Semacode.

The OCR module allows to automatically recognize text from images of documents taken with mobile application. This module effects in a PDF file, whose pages contain both the images and content of each page of the photographed document that can be marked, copied and searched. Many OCR applications are available on the market to enable this functionality to be implemented in the system of the claimed invention.

The mobile application is designed to take advantage of the capabilities of the mobile device's components (camera, microphone, speaker, etc.) to accelerate and facilitate work on the target application. In the recommended variant, it is a program created using the Apache Cordova platform, a development platform for mobile solutions, available under the Apache 2.0 License. The business logic of the application is written in JavaScript, while the presentation layer in HTML and CSS. It's designed to run on mobile devices, especially on smartphones and tablets. The platform used allows for easy adaptation of applications to run on various mobile operating systems such as Android, Windows Phone and iOS.

The mobile application has a simple interface and has a "Connect Device" function for pairing a mobile device and functions related to a used mobile device component (for example, "Take a Picture" function for making and saving pictures on a device when using a camera).

The mobile application also allows to change the name of the mobile device that is useful during and after pairing of the mobile device, especially if many people use the same model (having the same name) of the mobile device.

Major mobile application functionalities, such as code scanning, capture of images and making connection, are initiated from the target application, and apart from completion of the process, such as document capture, camera focusing on bar code, etc., do not require additional operations in mobile application.

The target application is a web application and consists of client part and server part. The client part is the content of the web pages of the application that is displayed through the user's browser, as well as the JavaScript code that is executed by the browser, and provides additional functionalities for those pages, such as animations, validations, etc. The server part is installed on the server that the user does not have direct access to, and can only communicate with it through his web browser. The invention uses a JavaScript library that allows for easy integration of the target application with the hub. The library is designed to run on the user's browser. Changes to the server part of the target application are only necessary to allow the user to authenticate.

The connection between the mobile application and the hub and between the hub and the target application is based on the SignalR library. It allows fast, bi-directional communication using several different protocols. This makes it possible to operate correctly across a wide range of applications and user browsers. Library architecture allows for high scalability, ie. use to communicate with many devices and applications simultaneously, with relatively low demand for computer resources.

The hub also provides a REST-style API, via HTTP protocol. API can be used to authenticate a user, as well as to download image and document files, and possibly other data originating from a mobile device stored in a hub database by the server part of the target application. By using HTTP protocol for this purpose, the server part of the target application does not need to use any additional libraries in most cases because the support for this protocol is built into the standard library of the vast majority of programming languages.

The server part of the target application requires minor modifications to allow for integration with the hub. The main task of integration is to authenticate the users of the system. It proceeds as follows:
1. The server part of the target application sends a token request to the hub via the REST API. As parameters, it provides a confidential access key, user name, and application name.
2. The hub verifies the correctness of the access key. If it is correct, it creates a token and returns it to the server part of the target application. The hub stores the linkage of the token with the user name and application name in the database.
3. The target application writes the received token e.g. in the user's session and then passes it to the client site, e.g. in the content of the web page. The token can also be retrieved by AJAX (Asynchronous JavaScript and XML) request from the client site of the target application.

The server part of the target application can also receive image and document files directly from the hub, thereby avoiding unnecessary transfer of this data to the client part of the target application.

The invention is intended for integration with web applications. Most of the functionalities is supported on the side of the client part of the target application, using the provided JavaScript library.

To start working one needs to link the mobile application to the current user of the target application. This process is called pairing. For maximum simplicity, QR codes are used, i.e. two-dimensional matrix codes, that contain the data necessary to carry out this process: the SignalR URL of the hub, an identifier of the connection with the user, and whether the pairing is permanent or temporary. This allows the pairing process to proceed quickly and the user does not have to enter any data manually. Pairing proceeds as follows:
1. The server part of the target application authorizes the user in the hub and receives the access token. It is then passed to the user's browser, e.g. in the content of the site being displayed.
2. The user browser using the JavaScript client library connects to the hub using a token.
3. The user by selecting the appropriate action on the site initiates the pairing process. The JS library retrieves a picture containing a QR code with the pairing data from the hub. The code is then displayed in a browser window.
4. The user launches the mobile application on the device and uses the "Connect Device" feature. The camera starts up on the mobile device.
5. The user guides the camera lens to the displayed QR code, which automatically scans.
6. The mobile application connects to the hub at the address from the QR code and sends the mobile device identifier and the connection identifier captured from the QR code.
7. The hub based on this information creates a tuple (device id, user name, application name) and saves it to the database.
8. The hub sends information about successful pairing to the target application. It should then hide the QR code and display the appropriate message to the user.

With one mobile device, multiple users can be paired so that several users working side-by-side can share a single phone or tablet together.
The JavaScript library that is part of this invention allows for easy implementation in the target application. To connect to the hub, it is sufficient to perform the "start" method from the library, passing as parameters the hub address and the token obtained from the server part. The hub automatically assigns the linkage to the appropriate user and application. If the user is already paired with the mobile device, he or she can immediately start working.

The library allows to select a function that will be called whenever a mobile application changes state, so that the target application user can be kept informed about the availability of the mobile device.

Application of the invention by a software company producing target applications will allow the use of mobile device components, such as the built-in camera, directly in the web application. This greatly simplifies the process of sharing data from a mobile device to the application.

For example, using a mobile device to upload a document image to the web application, according to the invention, the user has to perform only two operations:
1. initiate the process of adding an image in the target application;
2. take a picture with the mobile device; the process of uploading a photo to the web application is done automatically and does not require user interaction.

Currently applied standard methods cause the user to perform a longer, reverse process, especially if it is not possible to launch the target (web) application via the mobile device:
1. take a picture with the mobile device;
2. upload the image to the computer where the target (web) application can be launched - by sharing and downloading the image via a cloud service, e-mail, direct connection using a USB cable, or otherwise;
3. upload the image to the target (web) application.

The process described above, carried out using existing methods, takes even a skilled user over a minute. For example, if one provides e-mail sharing (other ways are similar or more time consuming), for each picture taken this way the following steps are necessary:
1. attaching a photo to an e-mail;
2. sending a message to the user's e-mail address;
3. receiving a message on the computer where the target application can run;
4. saving the file with a photo to disk;
5. using the file load function from the target application.

For scenarios where extra operations are performed with an image (e.g. reading text from the image), the time it takes for the user is many times longer.

For comparison, using the claimed invention the image is included in the target application almost immediately (assuming there is a connection between the mobile application, the hub, and the target application), and the execution time is limited only by the data transmission rate.

From the point of view of the target application user, it is beneficial to reduce the process of linking a mobile device to a particular user of the target application to simple and time-sparing steps. The time profit with each usage of the mobile device to transmit data is significantly greater than the time devoted to a one-time configuration of the connection to the mobile device, since the linkage of the mobile device to the target application user can be fixed and allow to use the method of communicating, according to the invention, immediately upon logging in to the target application.

For the user of the target application using the described communication method, it is also advantageous to eliminate unnecessary actions, i.e. not directly related to the functionality used and many times repeated, such as adding a document image.

Data collected by mobile device components, such as camera photos, is not lost as a result of temporary disconnection between the mobile device and the hub because they are initially stored on the mobile device and are retrieved by the hub in the next step. When communication is restored, data can be retrieved by the hub.

Another advantage of the invention is that the bi-directional communication based on the SignalR library used allows the user to send data and commands from the hub to the user's web browser at any time, so that the user does not have to reload the web page of the target application to manually download and update data as it is in the case of traditional web browsing.

For the software developer, the primary benefit is that the described way of communicating the mobile device to the target application requires only minimal changes to the source code of the target application, which significantly shortens the integration process.

The software developer can expand the number of additional functionalities associated with the used mobile device component, without having to make changes to the target application itself, which also has a significant positive impact on the time and cost of deployment. For new functionalities one can use ready-made and tested solutions maintained by other companies, including free-of-charge-licensing solutions.

The embodiment of the invention is shown in the drawings showing the high-level block diagrams of:

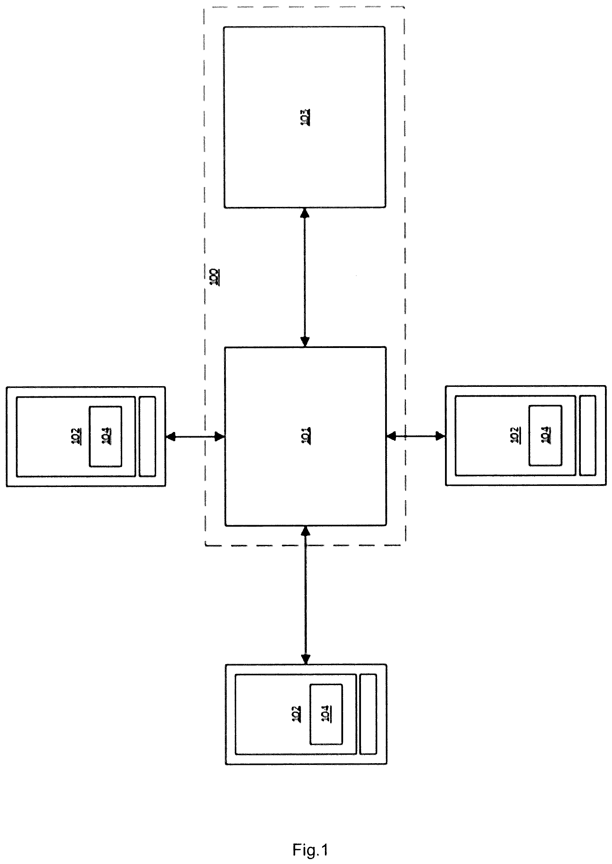

Fig. 1 the main components of the system according to the invention;

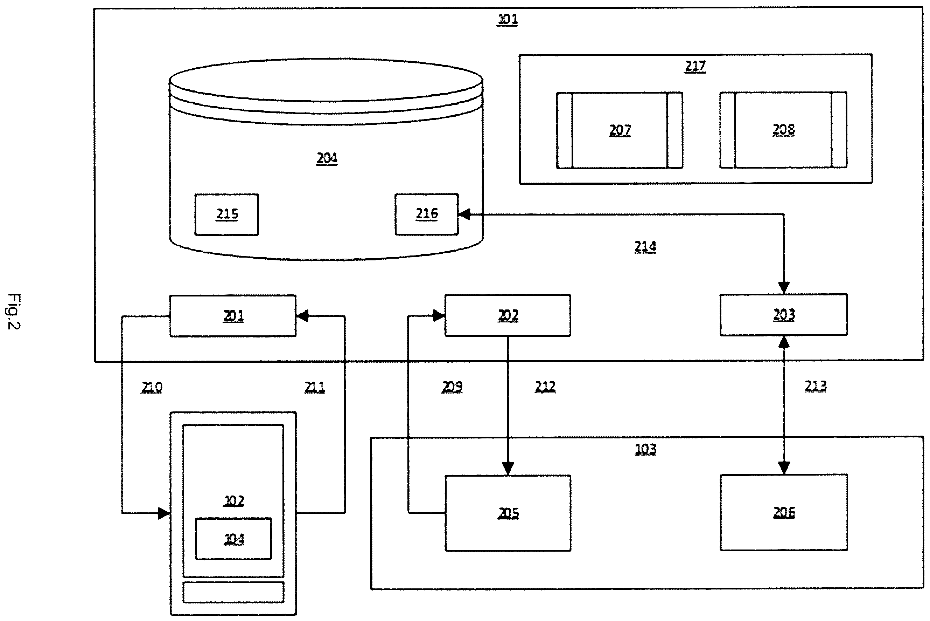

Fig. 2 communication details between the main components of the system;
Fig. 3 integration between the hub and the server part of the target application for user authentication;
Fig. 4 the system and method for transmitting a request for the use of the mobile device component and transferring data to the mobile application;
Fig. 5 the system and method for transmitting the data collected by the mobile application to the hub and transforming them with an additional module;
Fig. 6 the system and method for providing the user of the target application with data obtained with the mobile device and processed with a dedicated hub module.

An embodiment of the claimed invention is a system that includes, but is not limited to, a function of scanning documents on a mobile device and subsequently providing them in the target application, in the form of a document image and a document text that is read from the document image by the OCR module.

The system of the invention comprises three key elements: the server application, i.e. the hub (101), the mobile device (102) with the mobile application running therein (104), and the target web application (103).

The user of the target application (103) initiates an action performed using mobile device components, the result of which is available for the target application. In this embodiment of the invention, the mobile device (102) is a user-controlled web camera or a camera in a smartphone.

The main element of the hub (101), i.e. the SignalR library element, has two interfaces: a delivery interface (201) for connecting to the mobile application (104) and a client interface (202) for connecting to the client part (205) of the target application (103). The hub waits for commands (209) from the target application (103) and sends (210) them to the mobile application (104) on the mobile device (102). After performing the operation, it receives data (211) from the mobile device and, after processing, transmits (212) back to the target application (103).

The authentication mechanism is implemented in such a way that an access key is stored in the configuration of the hub (101), which also has a server part (206) of the target application and uses it when creating a user access token. The hub stores in the database (204) information for the paired mobile device (102) and the associated user: a device specific identifier and a user login (215).

Data (216) is also stored in the database provided by the mobile device, in the embodiment of the invention data are files containing photos taken with a camera. These data are retrieved (214) from the database and made available (213) through the application programming interface (203) API.

The bar code content decoder module (207) according to Aztec specification and the OCR module (208) using ABBYY solutions are connected (217) to the hub. The hub (101) also provides REST-style API via HTTP (203) protocol.

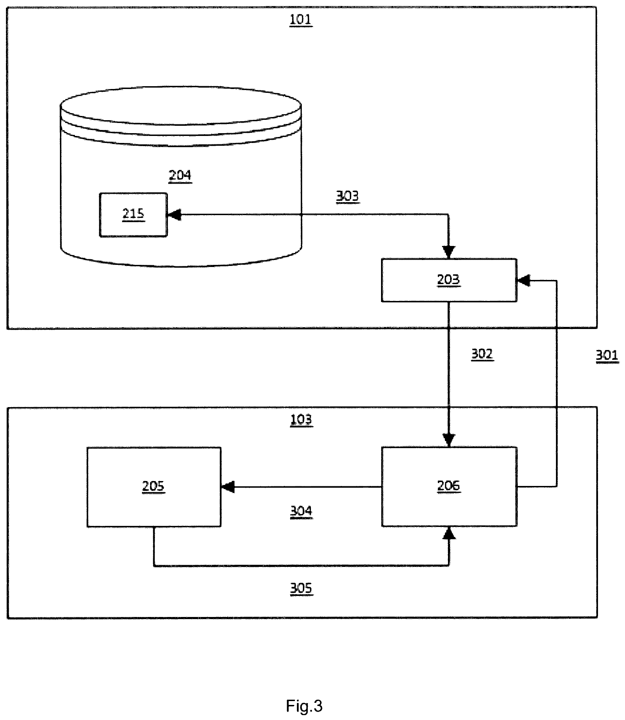

Authentication of the solution users proceeds as follows (Fig. 3):
1. The server part (206) of the target application sends a token request (301) to the hub (101) through the API REST (205). As parameters, it provides a confidential access key, user name, and application name.
2. The hub (101) verifies the correctness of the access key. If it is correct, it creates a token and returns it (302) to the server part (206) of the target application. The Hub stores (303) in the database (204) the linkage of the token with the user name and application name (215).
3. The target application (103) writes the received token in the user session and then passes it to the client site (304) in the website content. The token can also be retrieved through the AJAX request from the client part (305) of the target application.

The server part (206) of the target application can also receive (213) image and document files directly from the hub (101) so as not to transmit this data unnecessarily to the client part (205) of the target application that is launched in the user's web browser.

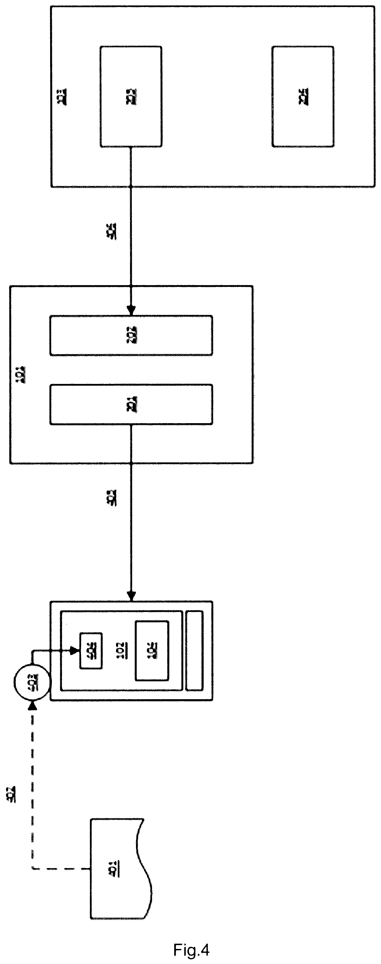

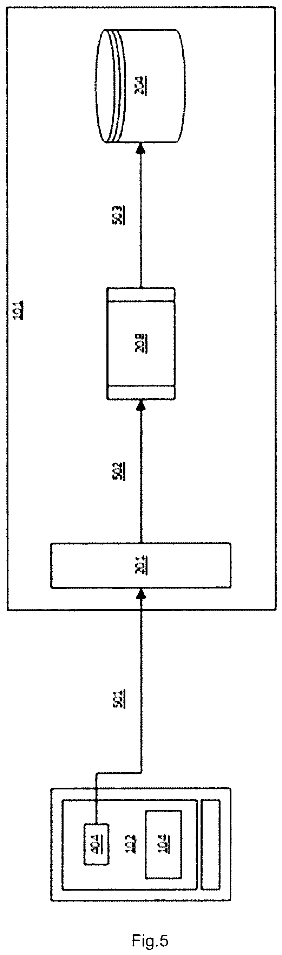

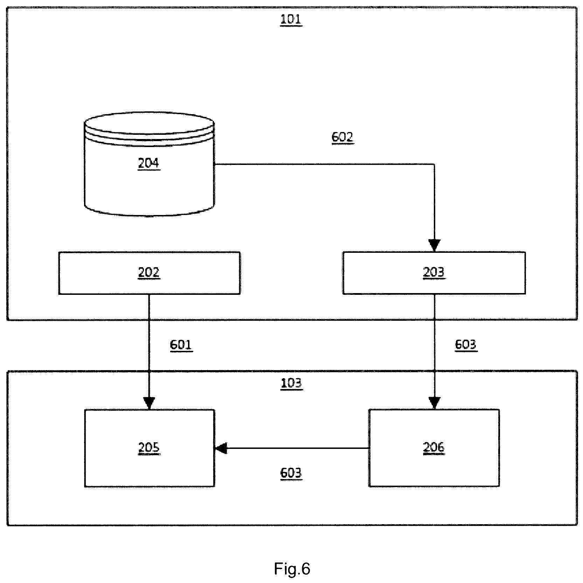

Utilization of the document scanning functionality offered by the invention is reduced to the following steps, shown in Fig. 3 - Fig. 6:
1. The user using the web browser in which the client part (205) of the target application (103) is running uses the "Scan document" function.
2. The request is sent (406) by the client part (205) of the target application (103) to the SignalR interface (202) of the hub (101).
3. The hub (101) transmits (405) the request via the SignalR interface (201) to the mobile device (102) paired with the user on which the mobile application (104) is installed.
4. The user uses the mobile device (102) to take photographs of consecutive pages of the document (401). The document images are made in the same way as in case of using the standard application "Camera" built into the mobile device. The images are recorded (402) by the camera (403) built into the mobile device and temporarily stored in the mobile device memory (404).
5. In the next step, the mobile application (104) establishes communication with the hub (101), transmitting (501) subsequent images from the mobile device memory (404) to the SignalR interface (201) of the hub (101).
6. Photographs are transferred (502) to the OCR module (208) where they are processed, resulting in a PDF file containing images of the individual pages of the source document (one per page), and text extracted from the images.
7. The file is transferred (503) to the database (204) of the hub (101).
8. The hub (101) transmits (601) a file identifier, i.e. a set of information to identify the file, via the SignalR interface (202) to the client part (205) of the target application (103).
9. The server part (206) of the target application (103), through the REST interface (203), downloads (603) from the database the file provided by the hub (101).
10. The file is made available (604) to the client part (205) of the target application (103) after transferring (605) its identifier to the server part (206) of the target application (103).

## Claims

1. A communication system between mobile devices and servers, **characterized in that** it comprises a server (100) with a hub (101) installed within to which at least one mobile device (102) is connected by wire or wirelessly, the server being provided with a target application (103) containing a client part (205) and a server part (206), and the mobile device (102) is provided with a mobile application (104), the hub (101) having a delivery interface (201) for connecting to the mobile application (104), a client interface (202) for connecting to the client part (205) of the target application (103), and a REST interface (203) for connecting to the server part (206) of the target application (103), and wherein the hub (101) waits for commands (209) from the target application (103) and sends (210) them to the mobile application (104) on the mobile device (102), and after executing the operation requested by the target application (103) receives data (211) from the mobile device (102) and after processing according to a given procedure sends (212) them to the target application (103).

2. The system according to claim 1, **characterized in that** the hub (101) contains an access key also available to the server part (206) of the target application (103) and uses it to generate an access token for the user of the mobile device (102), the hub stores in a database (204) an identifier of specific device and the user's login (215) for the paired mobile device (102) and associated user.

3. The system according to claim 1 or 2, **characterized in that** data (216) transferred by the mobile device (102) is stored in the database (204) and then retrieved (214) from the database (204), and shared (213) via the REST interface (203) to the server part (206) of the target application (103).

4. The system according to claim 1 or 2, or 3, **characterized in that** the barcode content decoder module (207) and the OCR module (208) are attached (217) to the hub.

5. The system according to any of claims 1 to 4, **characterized in that** pairing of the mobile device (102) with the user account in the target application (103) is performed by scanning the QR code from the computer screen displaying in the browser the client part (205) of the target application (103).

6. The system according to claim 5, **characterized in that** pairing of the mobile device (102) with the user account in the target application (103) defines a way of exchanging information for further actions initiated from the target application (103).

7. A method of communication between mobile devices and servers using a communication system between mobile devices and server as defined in claims 1-6, **characterized in that** the hub (101) installed in the server (100) via the delivery interface (201) connects to the mobile application (104) installed on the mobile device (102), and through the client interface (202) communicates with the client part (205) of the target application (103) installed on the server (100), and via the REST interface (203) connects to the server part (206) of the target application (103), wherein the hub (101) is waiting for commands (209) from the target application (103) and transmits them (210) to the mobile application (104) on the mobile device (102) connected to the hub (101) by wire or wirelessly, and after performing the operation requested by the target application (103) receives data (211) from the mobile device (102) and after processing according to a given procedure transmits (212) it to the target application (103).

8. The method according to claim 7, **characterized in that** in order to authenticate the user, the server part (206) of the target application (103) sends to the hub (101) a request (301) of creating the token by the client part (205) of the target application (103), and provides the private access key, the user name and the application name, then the hub (101) verifies the correctness of the access key, and if it is correct, it creates a token and returns (302) it to the server part (206) of the target application (103) and stores (303) in the database (204) the association of the token with the user name and the application name, i.e. the device identifier and the user login (215), after which the target application (103) writes the received token in the user session and then passes it to the client site (304) in the WWW site, or to the site of the client part (305) of the target application.

9. The method according to claim 7 or 8, **characterized in that** in order to avoid uploading photos and document files to the client part (205) of the target application (103), the server part (206) of the target application (103) receives (213) it directly from the hub (101).

10. The method according to claim 7 or 8, or 9, **characterized in that** in order to scan a document, the user using the web browser that has the client part (205) of the target application (103) running uses the "scan document" function, the request is sent (406) by the client part (205) of the target application (103) to the client interface (202) of the hub (101), from which the request is transmitted (405) via the delivery interface (201) to the paired with the user the mobile device (102), on which the mobile application (104) is installed, then the user with use of the mobile device (102) takes photographs of subsequent pages of the document (401), and images are captured (402) by the camera (403) built into the mobile device and temporarily stored in the mobile device memory (404), after which the mobile application (104) sends (501) subsequent photographs from the memory (404) of the mobile device to the delivery interface (201) of the hub (101), after which the images are transferred (502) to the OCR module (208) where they are processed, resulting in a PDF file containing images of individual pages of the source document and a text extracted from the images, that file is transferred (503) to the database (204) of the hub (101), which transmits (601) a file identifier that ebables to identify the file, through the client interface (202) to the client part (205) of the target application (103), then the server part (206) of the target application through the REST interface (203) retrieves (603) the file shared by the hub (101) from the database (204), and this file is made available (604) to the client part (205) of the target application (103) after passing (605) its identifier to the server part (206) of the target application (103).

11. The method according to any of claims 7 to 10, **characterized in that** in order to pair the mobile device (102) with the user account in the target application (103), the QR code is scanned from the computer screen displaying in the browser the client part (205) of the target application (103).

12. The method according to claim 11, **characterized in that** pairing the mobile device (102) with the user account in the target application (103) defines a way of exchanging information for further actions initiated from the target application (103).
